(19) Europäisches Patentamt
European Patent Office
Office européen des brevets

(11) **EP 0 552 456 B1**

(12) **EUROPÄISCHE PATENTSCHRIFT**

(45) Veröffentlichungstag und Bekanntmachung des Hinweises auf die Patenterteilung:
28.02.1996 Patentblatt 1996/09

(51) Int. Cl.$^6$: **B60T 8/32**

(21) Anmeldenummer: 92121041.5

(22) Anmeldetag: 10.12.1992

(54) **Verfahren zur Bestimmung des Geschwindigkeitsunterschiedes zwischen Rädern verschiedener Achsen eines Fahrzeuges**

Procedure for determining the speed difference between the wheels of different axles of a vehicle

Procédé pour déterminer la différence de vitesse entre les roues de différents axes d'un véhicule

(84) Benannte Vertragsstaaten:
ES FR GB IT

(30) Priorität: 23.01.1992 DE 4201675

(43) Veröffentlichungstag der Anmeldung:
28.07.1993 Patentblatt 1993/30

(73) Patentinhaber: MERCEDES-BENZ AG
D-70327 Stuttgart (DE)

(72) Erfinder:
• Schöb, Reinhold, Dipl.-Ing.
W-7024 Filderstadt (DE)
• Scharnowski, Bernd, Dipl.-Ing.
W-7012 Fellbach (DE)
• Maass, Volker, Dipl.-Ing.
W-7000 Stuttgart 50 (DE)
• Eilert, Gerd, Dipl. Ing.
D-7052 Schwaikheim (DE)

(56) Entgegenhaltungen:
DE-A- 3 505 455        DE-A- 3 818 511
DE-C- 4 019 886

## Beschreibung

Die Erfindung betrifft ein Verfahren zur Bestimmung des Geschwindigkeitsunterschiedes zwischen Rädern verschiedener Achsen eines Fahrzeuges gemäß dem Oberbegriff des Patentanspruches 1 und des Patentanspruches 2.

Aus der DE 35 05 455 A1 ist bereits ein gattungsgemäßes Verfahren bekannt, wonach eine Gleichung angegeben ist, nach der der Geschwindigkeitsunterschied der Hinterräder gegenüber den Vorderrädern ermittelt wird. Dabei wird zunächst die Differenz zwischen der Geschwindigkeit der Hinterräder und einer gemittelten Geschwindigkeit der Vorderräder ermittelt. Nach der DE 35 05 455 A1 wird weiterhin ein untersteuerndes bzw. übersteuerndes Kurvenfahrverhalten des Fahrzeuges berücksichtigt, indem ein Korrekturwert eingebracht wird, der als Ackermann-Korrektur bezeichnet wird. Diese Korrektur ist dabei eine Funktion der Differenz der Vorderradgeschwindigkeiten, die mit der Geschwindigkeit der Hinterräder multipliziert wird. Es erfolgt also eine Bestimmung des Geschwindigkeitsunterschiedes DV der Hinterräder gegenüber den Vorderrädern nach folgender Gleichung:

$$DV = VHM - VVM + VHM * f(DLA),$$

wobei VHM die gemittelte Geschwindigkeit der Räder der Hinterachse ist, VVM ist die gemittelte Geschwindigkeit der Räder der Vorderachse, DLA ist die Differenz der Geschwindigkeiten der Vorderräder und f(DLA) ist dabei die Funktion, nach der die Korrektur erfolgt.

Des weiteren ist es bekannt (DE 39 23 782 A1), bei der Ermittlung von Radschlupf eine Kurvenfahrt zu berücksichtigen, allerdings erfolgt dabei keine Berücksichtigung des Ackermann-Effektes sondern es wird lediglich für jede Achse einzeln die aufgrund der Kurvenfahrt größere Geschwindigkeit des kurvenäußeren Rades berücksichtigt.

Gegenüber diesem Stand der Technik wird gemäß dem Gegenstand der vorliegenden Erfindung eine Ausführungsform des Verfahrens derart ausgestaltet, daß die Anwendbarkeit des Verfahrens verbessert wird und eine weitere Ausführungsform des gattungsgemäßen Verfahrens derart ausgestaltet, daß die Funktionsweise des gattungsgemäßen Verfahrens verbessert wird.

Dies erfolgt erfindungsgemäß mit den kennzeichnenden Merkmalen des Anspruchs 1 oder des Anspruches 2, wobei die Merkmale der Unteransprüche vorteilhafte Aus- und Weiterbildungen kennzeichnen.

Weitere Vorteile der Erfindung bestehen darin, daß bei einer Kombination der beiden Ausführungsformen sowohl die Anwendbarkeit des Verfahrens als auch die Funktionsweise des gattungsgemäßen Verfahrens verbessert wird.

In besonders vorteilhafter Weise werden bei dem erfindungsgemäßen Verfahren nicht nur sich aufgrund der Fahrzeuggeometrie ergebende Geschwindigkeitsdifferenzen berücksichtigt sondern auch solche Geschwindigkeitsdifferenzen, die aufgrund der Fahrdynamik auftreten. Mit zunehmender Querbeschleunigung nähern sich die Bahnradien von Vorder- und Hinterachse aufgrund des sich ändernden Schwimmwinkels an. Das heißt, daß bei großen Querbeschleunigungen aufgrund der Fahrdynamik keine Korrektur erfolgen sollte, da der Effekt der Fahrzeuggeometrie dann durch die Fahrdynamik kompensiert wird.

Im folgenden werden die Verhältnisse bei einem Fahrzeug beschrieben, das im normalen Fahrbetrieb eine angetriebene Hinterachse aufweist. Die Erfindung kann in besonders vorteilhafter Weise bei allen Systemen Verwendung finden, bei denen der Schlupf zwischen den Achsen des Fahrzeuges zur Erfüllung ihrer Funktion ausgewertet wird wie z.B. bei einer Schlupfregelung (AntriebsSchlupfRegelung ASR), einer automatischen Zuschaltung eines Sperrdifferentiales zwischen den Achsen des Fahrzeuges bzw. einem automatisch zuschaltenden Allradantrieb. Außerdem sind alle Geschwindigkeiten in der Einheit km/h einzusetzen, soweit Größenordnungen angegeben sind.

Ein Ausführungsbeispiel der Erfindung ist in der Zeichnung schematisch dargestellt und wird im folgenden näher beschrieben. Es zeigen:

Fig. 1:    eine Darstellung der Korrekturfunktion f(DLR),

Fig. 2:    eine Darstellung einer Verbesserungsfunktion h(VVM),

Fig. 3:    ein Ausführungsbeispiel für eine Adaption der Korrekturfunktion f(DLR) an ein bestimmtes Fahrzeug,

Fig. 4:    ein Ausführungsbeispiel für eine Adaption der Verbesserungsfunktion h(VVM) an ein bestimmtes Fahrzeug und

Fig. 5:    eine Darstellung der Abhängigkeit der Größe DLR (Differenz der Vorderradgeschwindigkeiten bezogen auf die mittlere Vorderradgeschwindigkeit) von der Fahrzeuggeschwindigkeit, die durch die mittlere Vorderradgeschwindigkeit repräsentiert wird, um eine Querbeschleunigung abzuleiten.

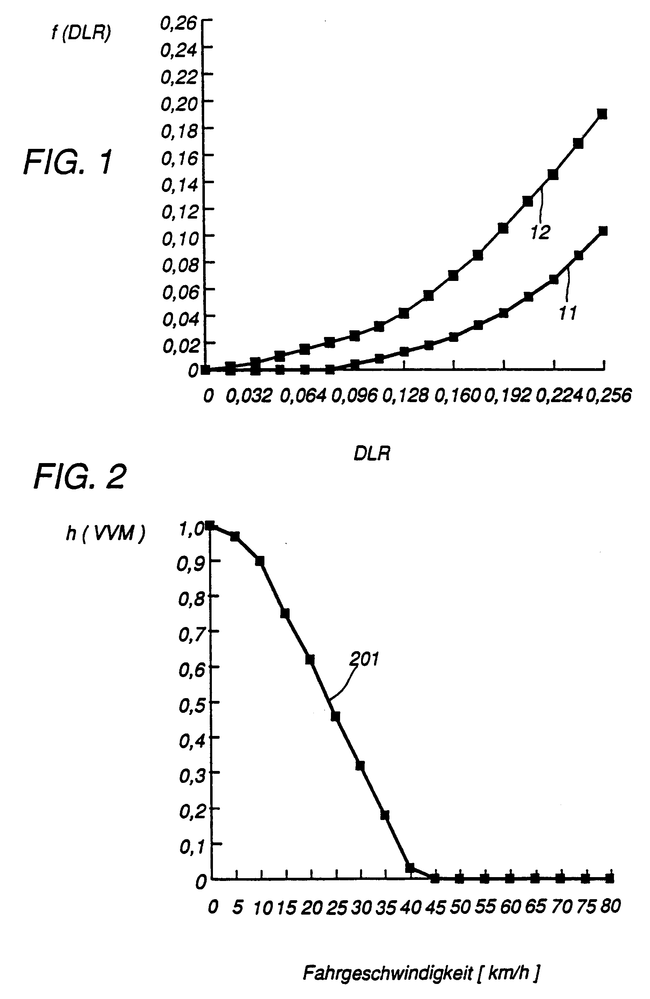

Wie aus Fig. 1 ersichtlich, kann die zur Korrektur verwendete Korrekturfunktion f(DLR) in Abhängigkeit des Fahrzeugtyps Schwankungen unterliegen. Die Größe DLR ist dabei die Differenz der Geschwindigkeiten der Vorderräder, bezogen auf die mittlere Vorderradgeschwindigkeit VVM. Die Schwankungen der Korrekturfunktion f(DLR) beruhen dabei in erster Linie darauf, daß die Korrekturfunktion f(DLR) ein Maß ist für aufgrund einer Kurvenfahrt auftretende Geschwindigkeitsunterschiede zwischen den Vorder- und den Hinterrädern. Das heißt, daß sich der Verlauf der Korrekturfunktion f(DLR) im wesentlichen in Abhängigkeit von dem Radstand, der Spurbreite und der Lenkgeometrie des Fahrzeuges ergibt. Fig. 1 zeigt beispielhaft die Verläufe zweier Korrekturfunktionen f(DLR) für zwei Fahrzeugtypen, bei denen die mit 11 bezeichnete Korrekturfunktion f(DLR) gegenüber der mit 12 bezeichneten Korrekturfunktion f(DLR) Unterschiede in Spurweite und/oder Radstand kennzeichnet.

Die Berücksichtigung der Fahrdynamik kann nun erfolgen, indem zu der bekannten Gleichung noch eine weitere Verbesserungsfunktion h(VVM) hinzugefügt wird. Die Größe VVM ist dabei die gemittelte Geschwindigkeit der Vorderräder. Ein möglicher Verlauf der Verbesserungsfunktion h(VVM) ist für die beiden Fahrzeuge, für die bereits in Fig. 1 die Korrekturfunktionen f(DLR) dargestellt wurden, in Fig. 2 gezeigt. Fig. 2 ist dabei zu entnehmen, daß der Verlauf der Verbesserungsfunktion h(VVM) für die beiden Fahrzeugtypen identisch ist (Kurve 201). Die Korrektur mittels der Verbesserungsfunktion h(VVM) erfolgt dabei, indem die bekannte Gleichung abgewandelt wird in folgende Form:

$$DV = VHM - VVM + VVM * f(DLR) * h(VVM).$$

Dabei ist die Größe DV der Geschwindigkeitsunterschied der Hinterräder zu den Vorderrädern, wobei dieser Geschwindigkeitsunterschied in km/h angegeben wird. Die Größe VHM ist die gemittelte Drehzahl der Hinterräder. Die Berücksichtigung der Kurvenfahrt erfolgt dabei durch die Korrekturfunktion f(DLR). Durch den Ansatz einer derartigen Gleichung wird die Tatsache berücksichtigt, daß sich mit zunehmender Querbeschleunigung $a_q$ die Bahnradien von Vorder- und Hinterachse aufgrund des sich ändernden Schwimmwinkels annähern. Das heißt, daß bei großen Querbeschleunigungen $a_q$ aufgrund der Fahrdynamik keine Korrektur erfolgen sollte, da der Effekt der Fahrzeuggeometrie dann durch die Fahrdynamik kompensiert wird. Durch diesen Ansatz der Verbesserungsfunktion h(VVM) ist somit gewährleistet, daß bei großen Fahrzeuggeschwindigkeiten, die bei einer Kurvenfahrt zu großen Querbeschleunigungen $a_q$ führen, die Korrektur verschwindet. Grundsätzlich sind auch andere Realisierungsmöglichkeiten der Korrektur denkbar. Wichtig ist dabei lediglich, daß die Korrektur mit zunehmender Querbeschleunigung $a_q$ verschwindet. Die entsprechende Verwendung der Verbeserungsfunktion h(VVM) stellt dabei lediglich ein Ausführungsbeispiel für eine derartige Realisierungsmöglichkeit dar.

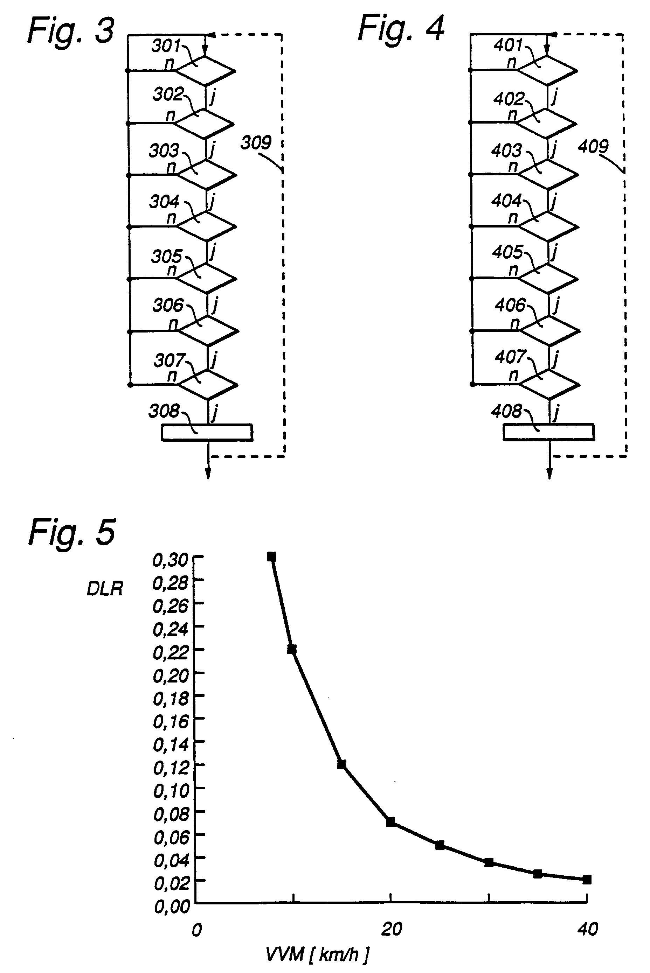

Fig. 3 zeigt ein Ausführungsbeispiel für eine Adaption der Korrekturfunktion f(DLR) an ein bestimmtes Fahrzeug. Diese Adaption erfolgt dabei derart, daß eine bestimmte Musterfunktion f(DLR)$_{Muster}$ abgespeichert wird. Diese Musterfunktion f(DLR)$_{Muster}$ entspricht dabei einer gemittelten Musterfunktion f(DLR)$_{Muster}$ zur Verwendung als Korrekturfunktion der an einzelnen Fahrzeugen ermittelten Korrekturfunktion f(DLR). Unter bestimmten Fahrbedingungen wird diese Musterfunktion dann adaptiert.

Diese bestimmten Fahrbedingungen werden in dem Ausführungsbeispiel der Fig. 3 in den Schritten 301 bis 307 überprüft. In dem Schritt 301 wird dabei überprüft, ob der Motor läuft. Ist dies der Fall, erfolgt ein Übergang zu der Überprüfung entsprechend dem Schritt 302. Andernfalls wird der Ablauf des Verfahrens abgebrochen. In dem Schritt 302 wird dabei überprüft, ob ein Bremsvorgang vorliegt. Ist dies der Fall, wird der Ablauf des Verfahrens abgebrochen, um eine fehlerhafte Adaption durch möglicherweise auftretenden Bremsschlupf zu vermeiden. Andernfalls erfolgt ein Übergang zu dem Schritt 303, in dem überprüft wird, ob die Fahrzeuggeschwindigkeit, die der gemittelten Vorderradgeschwindigkeit VVM entspricht, innerhalb eines bestimmten Geschwindigkeitsbereiches liegt, in dem zu erwarten ist, daß die Korrektur auch wirksam ist, d.h. daß das Produkt der Korrekturfunktion f(DLR) mit der Größe VVM und der Verbesserungsfunktion h(VVM) von 0 verschieden ist. Gemäß der Darstellung der Fig. 2 liegt ein geeigneter Geschwindigkeitsbereich für die Größe VVM dabei zwischen 5 km/h und 40 km/h. Liegt die Größe VVM innerhalb des bestimmten Geschwindigkeitsbereiches, erfolgt ein Übergang zu dem Schritt 304, andernfalls erfolgt ein Abbruch des Ablaufs des Verfahrens. In dem Schritt 304 wird dann überprüft, ob die Größe DLR einen bestimmten Mindestbetrag überschritten hat. Wie Fig. 1 zu entnehmen ist, weist der Wert der Korrekturfunktion f(DLR) erst einen Wert größer als 0 auf, wenn DLR größer als 0 ist. Damit somit eine Korrektur wirksam ist, muß also DLR oberhalb eines bestimmten Schwellwertes DLR$_{min}$ liegen, der beispielsweise 0,096 betragen kann. Liegt die Größe DLR oberhalb des bestimmten Schwellwertes DLR$_{min}$, wird in dem Schritt 305 weiterhin geprüft, ob die Größe DLR unterhalb eines weiteren Schwellwertes DLR$_{max}$ liegt. Liegt die Größe DIR unterhalb des weiteren Schwellwertes DLR$_{max}$ - das bedeutet, daß die Querbeschleunigung $a_q$ unterhalb eines Schwellwertes $a_{qmax}$ liegt -, erfolgt ein Übergang zu dem Schritt 306. Andernfalls erfolgt ein Abbruch des Ablaufs des Verfahrens. Dabei kann die Größe DLR$_{max}$ in vorteilhafter Weise noch von der durch die mittlere Geschwindigkeit VVM der Vorderräder abhängen, wie in Fig. 5 dargestellt. In dem Schritt 306 wird dabei überprüft, ob der aus den gemessenen Geschwindigkeiten der Hinterräder und der Vorderräder direkt ermittelte Geschwindigkeitsunterschied DV der Hinterräder (angetriebene Räder) bezogen auf die Vorderräder (nicht angetriebene Räder) unterhalb eines Schwellwertes DV$_{max}$ liegt, der die Größenordnung 2 km/h haben kann. Ist dies der Fall, erfolgt ein Übergang zu dem Schritt 307. Andernfalls erfolgt ein Abbruch des Ablaufs des Verfahrens. In dem Schritt 307 wird dabei überprüft, ob die Beschleunigung AHM der Hinterräder unterhalb eines Schwellwertes AHM$_{max}$ liegt. Die Beschleunigung AHM der Hinterräder kann dabei aus der Zeitableitung der Größe VHM gewonnen werden. Eine Größenordnung für den Schwellwert AHM$_{max}$ kann bei 0,5 m/s$^2$ liegen. Die Überprüfungen entsprechend den Schritten 306 und 307 werden durchgeführt, um eine Adaption zu unterbinden, wenn ein großer Antriebsschlupf vorliegt. Wird die Abfrage des Schrittes 307 bejaht, wird in dem Schritt 308 eine Adaption durchgeführt. Andernfalls erfolgt ein Abbruch des Ablaufs des Verfahrens.

Die Durchführung der Adaption der Korrekturfunktion f(DLR) entsprechend dem Schritt 308 kann dabei erfolgen, indem die Werte der Musterfunktion f(DLR)$_{Muster}$ punktweise an den gespeicherten Stützstellen der Musterfunktion f(DLR)$_{Muster}$ an die Werte der Korrekturfunktion f(DLR) angeglichen werden, die sich aufgrund der vorliegenden Fahrbedingungen für die Korrekturfunktion f(DLR) ergeben. Die Adaption ist dann vollständig, wenn an allen Stützstellen die Adaption erfolgt ist, das heißt, die Abweichungen gegen 0 konvergieren. Das heißt dann, daß die bestimmten Fahrbedingungen wiederholt vorliegen müssen, um eine Adaption bei verschiedenen Werten DLR durchführen zu können (309). Alternativ dazu kann an einer Stützstelle der Musterfunktion f(DLR)$_{Muster}$ ein Faktor bestimmt werden, mit dem der Wert der Musterfunktion f(DLR)$_{Muster}$ an dieser Stützstelle multipliziert werden muß, um den sich entsprechend den vorliegenden Fahrbedingungen ergebenden Wert der Korrekturfunktion f(DLR) zu erhalten. Eine vollständige Adaption kann dann erfolgen, indem die Werte der Musterfunktion f(DLR)$_{Muster}$ an den anderen Stützstellen mit demselben Faktor multipliziert werden. Diese Adaption kann dabei selbstverständlich auch erfolgen, wenn in der Gleichung die Verbesserungsfunktion h(VVM) nicht vorkommt. Die Adaption der Musterfunktion f(DLR)$_{Muster}$ an einer einzelnen Stützstelle erfolgt dabei derart, daß aus den bestimmten Fahrbedingungen, die in den Schritten 301 bis 307 überprüft wurden, abgeleitet wird, daß Fahrbedingungen vorliegen, aufgrund derer keine Geschwindigkeitsdifferenz zwischen den Hinterrädern und den Vorderrädern vorliegt, die auf einen Antriebsschlupf der Hinterräder zurückzuführen sind. Somit beruhen Drehzahldifferenzen zwischen den Hinterrädern und den Vorderrädern unter diesen Fahrbedingungen auf den beschriebenen Effekten bei einer Kurvenfahrt. Die Adaption erfolgt dann also so, daß der im Ergebnis zu erzielende Wert DV gleich 0 ist. Das heißt, daß die Größe f(DLR)*h(VVM)*VVM dem Betrage nach gleich der Differenz VHM-VVM ist und gegenüber dieser Differenz ein unterschiedliches Vorzeichen aufweist.

Fig. 2 ist zu entnehmen, daß die Verbesserungsfunktion h(VVM) bei verschiedenen Fahrzeugtypen zumindest nahezu denselben Verlauf aufweist. Eine Adaption dieser Funktion kann dabei entsprechend dem Ausführungsbeispiel der Fig. 4 erfolgen, wobei dann die Adaption der mit größeren Abweichungen behafteten Korrekturfunktion f(DLR) abgeschlossen ist. Um die möglichen Abweichungen der Korrekturfunktion f(DLR) und der Verbesserungsfunktion h(VVM) bei diesen Adaptionen trennen zu können, wird dabei der in dem Schritt 303 zu überprüfenden Geschwindigkeitsbereich eingeengt, so daß dieser Geschwindigkeitsbereich beispielsweise zwischen 5 km/h und bis zu 10-15 km/h liegt. Dabei ist wesentlich, daß dann bei der Adaption der Musterfunktion f(DLR)$_{Muster}$ mögliche Schwankungen der Verbesserungsfunktion h(VVM) entsprechend der Darstellung der Fig. 2 gering werden, da die Verbesserungsfunktion h(VVM) zunächst einen flachen Verlauf aufweist, der mit zunehmender Geschwindigkeit steiler wird, bis die Verbesserungsfunktion h(VVM) bei Geschwindigkeiten größer als 50 km/h den Wert 0 annimmt. Bei dem Ablauf des Verfahrens der Fig. 4 entsprechen dann die Überprüfungen in den Schritten 401-407 den Überprüfungen in den Schritten 301-307, die im Zusammenhang mit Fig. 3 beschrieben sind. In dem Schritt 408 erfolgt dann die Adaption der Verbesserungsfunktion h(VVM) analog zu der Adaption der Korrekturfunktion f(DLR) entsprechend der Beschreibung des Schrittes 308.

Fig. 5 zeigt den Verlauf einer Funktion der Größe DLR in Abhängigkeit von der Größe VVM. Diese Funktion kennzeichnet die Änderung der Größe DLR mit der Größe VVM bei einer konstanten Querbeschleunigung a$_q$. In der Fig. 5 kennzeichnet diese Querbeschleunigung a$_q$ den Schwellwert a$_{qmax}$ der Fig. 3. Dieser Schwellwert a$_{qmax}$ kann dabei 1,5m/s$^2$ betragen.

**Patentansprüche**

1. Verfahren zur Bestimmung des Geschwindigkeitsunterschiedes zwischen Rädern verschiedener Achsen eines Fahrzeuges, wobei die Differenz zwischen den Geschwindigkeiten der Hinterräder und den Geschwindigkeiten der Vorderräder gebildet wird, wobei eine Korrektur bestimmt wird, die aufgrund der Fahrzeuggeometrie auftretende Unterschiede zwischen den Geschwindigkeiten der Vorderräder und der Hinterräder kompensiert, wobei sich der Geschwindigkeitsunterschied zwischen den Rädern verschiedener Achsen eines Fahrzeuges aus der Differenz zuzüglich der Korrektur ergibt,
**dadurch gekennzeichnet,**
daß unter bestimmten Fahrbedingungen (301-307), die zumindest dadurch charakterisiert sind, daß die Beschleunigung AHM der Hinterräder unterhalb eines Schwellwertes AHM$_{max}$ liegt (307) und daß eine Kurvenfahrt stattfindet (304), bei denen somit keine Geschwindigkeitsdifferenz DV der Räder verschiedener Achsen aufgrund eines Antriebsschlupfes vorliegt, eine Adaption der Korrektur erfolgt (308,309), indem die Differenz zwischen den Geschwindigkeiten VHM, VVM der Hinterräder und der Vorderräder bestimmt wird und indem die Korrektur so adaptiert wird, daß die Korrektur unter den bestimmten Fahrbedingungen dem Betrage nach gleich der Differenz zwischen den Geschwindigkeiten VHM, VVM der Hinterräder und der Vorderräder ist und gegenüber dieser Differenz ein unterschiedliches Vorzeichen aufweist.

2. Verfahren zur Bestimmung des Geschwindigkeitsunterschiedes zwischen Rädern verschiedener Achsen eines Fahrzeuges, wobei die Differenz zwischen den Geschwindigkeiten der Hinterräder und den Geschwindigkeiten der Vorderräder gebildet wird, wobei eine Korrektur bestimmt wird, die aufgrund der Fahrzeuggeometrie auftretende Unterschiede zwischen den Geschwindigkeiten der Vorderräder und der Hinterräder kompensiert, wobei sich der Geschwindigkeitsunterschied zwischen den Rädern verschiedener Achsen eines Fahrzeuges aus der Differenz zuzüglich der Korrektur ergibt,
**dadurch gekennzeichnet,**
daß bei der Korrektur die Querbeschleunigung $a_q$ des Fahrzeuges berücksichtigt wird (201), indem mit zunehmender Querbeschleunigung $a_q$ die Korrektur dem Betrage nach kleiner wird.

3. Verfahren nach Anspruch 1,
**dadurch gekennzeichnet,**
daß die Differenz DV bestimmt wird nach der Gleichung:

$$DV = VHM - VVM + f(DLR)*VVM,$$

wobei DLR die Differenz der Vorderradgeschwindigkeiten bezogen auf die mittlere Vorderradgeschwindigkeit VVM ist, daß Werte einer Musterfunktion $f(DLR)_{Muster}$ an bestimmten Stützstellen DLR abgespeichert werden, wobei die Musterfunktion $f(DLR)_{Muster}$ eine gemittelte Funktion der für einzelne Fahrzeugtypen ermittelten Korrekturfunktionen f(DLR) ist, und daß die Adaption der Korrektur durch eine Adaption der Korrekturfunktion f(DLR) erfolgt, indem zu den Stützstellen des Wertes DLR, an denen der Wert der Musterfunktion $f(DLR)_{Muster}$ gespeichert ist, der Wert der Korrekturfunktion f(DLR) derart bestimmt wird, daß die Korrektur f(DLR)*VVM dem Betrage nach gleich der Differenz VHM-VVM ist und wobei das Vorzeichen der Korrektur umgekehrt ist zu dem Vorzeichen der Differenz und wobei der bestimmte Wert der Korrekturfunktion f(DLR) der adaptierte Wert der Musterfunktion $f(DLR)_{Muster}$ ist.

4. Verfahren nach Anspruch 1,
**dadurch gekennzeichnet,**
daß die Differenz DV bestimmt wird nach der Gleichung:

$$DV = VHM - VVM + f(DLR)*VVM,$$

wobei DLR die Differenz der Vorderradgeschwindigkeiten bezogen auf die mittlere Vorderradgeschwindigkeit VVM ist, daß Werte einer Musterfunktion $f(DLR)_{Muster}$ an bestimmten Stützstellen DLR abgespeichert werden, wobei die Musterfunktion $f(DLR)_{Muster}$ eine gemittelte Funktion der für einzelne Fahrzeugtypen ermittelten Korrekturfunktionen f(DLR) ist, und daß die Adaption der Korrektur durch eine Adaption der Korrekturfunktion f(DLR) erfolgt, indem zu einer Stützstelle des Wertes DLR, an der der Wert der Musterfunktion $f(DLR)_{Muster}$ gespeichert ist, ein Faktor derart bestimmt wird, daß der Wert der Musterfunktion $f(DLR)_{Muster}$ an dieser Stützstelle multipliziert mit dem Faktor einen Wert der Korrekturfunktion f(DLR) derart ergibt, daß die Korrektur f(DLR)*VVM dem Betrage nach gleich der Differenz VHM-VVM ist und wobei das Vorzeichen der Korrektur umgekehrt ist zu dem Vorzeichen der Differenz und wobei sich die adaptierten Werte der Korrekturfunktion f(DLR) an den anderen Stützstellen DLR ergeben, indem die Werte der Musterfunktion $f(DLR)_{Muster}$ an den anderen Stützstellen mit dem Faktor multipliziert werden.

5. Verfahren nach Anspruch 2,
**dadurch gekennzeichnet,**
daß die Differenz DV bestimmt wird nach der Gleichung:

$$DV = VHM - VVM + h(VVM)*f(DLR)*VVM,$$

wobei VHM und VVM die Geschwindigkeiten der Hinterräder und der Vorderräder darstellen, wobei DLR die Differenz der Vorderradgeschwindigkeiten bezogen auf die mittlere Vorderradgeschwindigkeit VVM ist und wobei die Verbeserungsfunktion h(VVM) asymptotisch gegen 0 geht (201), so daß die Korrektur h(VVM)*f(DLR)*VVM ebenfalls asymptotisch gegen 0 geht.

6. Verfahren nach Anspruch 5,
**dadurch gekennzeichnet,**
daß unter bestimmten Fahrbedingungen (301-307), die zumindest dadurch charakterisiert sind, daß die Beschleunigung AHM der Hinterräder unterhalb eines Schwellwertes $AHM_{max}$ liegt (307) und daß eine Kurvenfahrt stattfindet (304), bei denen somit keine Geschwindigkeitsdifferenz DV der Räder verschiedener Achsen aufgrund eines Antriebsschlupfes vorliegt, eine Adaption der Korrektur erfolgt (308,309), indem Werte einer Musterfunktion $h(VVM)_{Muster}$ an bestimmten Stützstellen VVM abgespeichert werden, wobei die Musterfunktion $h(VVM)_{Muster}$ eine gemittelte Funktion der für einzelne Fahrzeugtypen ermittelten Verbesserungsfunktionen h(VVM) ist, und indem zunächst die Adaption der Korrekturfunktion f(DLR) bei niedrigeren Geschwindigkeiten VVM erfolgt und indem sodann zu den Stützstellen des Wertes VVM, an denen der Wert der Musterfunktion $h(VVM)_{Muster}$ gespeichert ist, der Wert der Verbesserungsfunktion h(VVM) derart bestimmt wird, daß die Korrektur h(VVM)*f(DLR)*VVM dem Betrage nach gleich der Differenz VHM-VVM ist und wobei das Vorzeichen der Korrektur umgekehrt ist zu dem Vorzeichen der Differenz und wobei der bestimmte Wert der Verbesserungsfunktion h(VVM) der adaptierte Wert der Musterfunktion h(VVM)$_{Muster}$ ist.

7. Verfahren nach Anspruch 5,
**dadurch gekennzeichnet,**
daß unter bestimmten Fahrbedingungen (301-307), die zumindest dadurch charakterisiert sind, daß die Beschleunigung AHM der Hinterräder unterhalb eines Schwellwertes AHM$_{max}$ liegt (307) und daß eine Kurvenfahrt stattfindet (304), bei denen somit keine Geschwindigkeitsdifferenz DV der Räder verschiedener Achsen aufgrund eines Antriebsschlupfes vorliegt, eine Adaption der Korrektur erfolgt (308,309), indem Werte einer Musterfunktion h(VVM)$_{Muster}$ an bestimmten Stützstellen VVM abgespeichert werden, wobei die Musterfunktion h(VVM)$_{Muster}$ eine gemittelte Funktion der für einzelne Fahrzeugtypen ermittelten Verbesserungsfunktionen h(VVM) ist, und indem zunächst die Adaption der Korrekturfunktion f(DLR) bei niedrigeren Geschwindigkeiten VVM erfolgt und indem sodann eine Adaption der Verbesserungsfunktion h(VVM) erfolgt, indem zu einer Stützstelle des Wertes VVM, an der der Wert der Musterfunktion h(VVM)$_{Muster}$ gespeichert ist, ein Faktor derart bestimmt wird, daß der Wert der Musterfunktion h(VVM)$_{Muster}$ an dieser Stützstelle VVM multipliziert mit dem Faktor einen Wert der Verbesserungsfunktion h(VVM) derart ergibt, daß die Korrektur h(VVM)\*f(DLR)\*VVM dem Betrage nach gleich der Differenz VHM-VVM ist und wobei das Vorzeichen der Korrektur umgekehrt ist zu dem Vorzeichen der Differenz und wobei sich die adaptierten Werte der Verbesserungsfunktion h(VVM) an den anderen Stützstellen VVM ergeben, indem die Werte der Musterfunktion h(VVM)$_{Muster}$ an den anderen Stützstellen mit dem Faktor multipliziert werden.

8. Verfahren nach einem der Ansprüche 1, 3, 4, 6 oder 7,
**dadurch gekennzeichnet,**
daß die bestimmten Fahrbedingungen zusätzlich durch wenigstens eine der folgenden Bedingungen charakterisiert sind:

- der Motor läuft (301),
- es findet kein Bremsvorgang statt (302),
- die Fahrzeuggeschwindigkeit (VVM) liegt innerhalb eines bestimmten Geschwindigkeitsbereiches (303,403),
- die Querbeschleunigung a$_q$ ist unterhalb eines bestimmten Schwellwertes a$_{qmax}$ (305) und/oder
- der Unterschied der Geschwindigkeiten VHM, VVM der Hinterräder und der Vorderräder ist unterhalb eines Schwellwertes DV$_{max}$.

## Claims

1. Method for determining the speed variation between wheels of different axles of a vehicle, in which the difference between the speeds of the rear wheels and the speeds of the front wheels is formed, in which a correction is determined which compensates for the variations between the speeds of the front wheels and the rear wheels arising because of the vehicle geometry and in which the speed variation between the wheels of different axles of a vehicle is given by the difference plus the correction, characterised in that under particular driving conditions (301-307), which are characterised at least in that the acceleration AHM of the rear wheels is below a threshold value AHM$_{max}$ (307) and that the vehicle is travelling round a curve (304), in which there is therefore no speed difference DV of the wheels of different axles due to drive slip, an adaptation of the correction takes place (308, 309) by determining the difference between the speeds VHM, VVM of the rear wheels and the front wheels and by adapting the correction in such a way that the correction, under the particular driving conditions, is equal with respect to magnitude to the difference between the speeds VHM, VVM of the rear wheels and the front wheels and exhibits a change of sign relative to this difference.

2. Method for determining the speed variation between wheels of different axles of a vehicle, in which the difference between the speeds of the rear wheels and the speeds of the front wheels is formed, in which a correction is determined which compensates for the variations between the speeds of the front wheels and the rear wheels arising because of the vehicle geometry and in which the speed variation between the wheels of different axles of a vehicle is given by the difference plus the correction, characterised in that in the correction, the transverse acceleration a$_q$ of the vehicle is taken into account (201) by the magnitude of the correction becoming smaller with increasing transverse acceleration a$_q$.

3. Method according to Claim 1, characterised in that the difference DV is determined from the equation:

$$DV = VHM - VVM + f(DLR)*VVM,$$

where DLR is the difference between the front-wheel speeds referred to the average front-wheel speed VVM, in that values of a model function f(DLR)$_{model}$ are stored at particular interpolation points DLR, the model function f(DLR)$_{model}$ being a function averaged from correction functions f(DLR) determined for individual vehicle types, and in that the adaptation of the correction takes place by an adaptation of the correction function f(DLR) in which the value of the correction function f(DLR) is determined, at the interpolation points of the value DLR at which the value of the model function f(DLR)$_{model}$ is stored, in such a way that the correction f(DLR)*VVM is equal with respect to magnitude to the difference VHM - VVM, the sign of the correction being the reverse of the sign of the difference and the particular value of the correction function f(DLR) being the adapted value of the model function f(DLR)$_{model}$.

4. Method according to Claim 1, characterised in that the difference DV is determined from the equation:

$$DV = VHM - VVM + f(DLR)*VVM,$$

where DLR is the difference between the front-wheel speeds referred to the average front-wheel speed VVM, in that values of a model function f(DLR)$_{model}$ are stored at particular interpolation points DLR, the model function f(DLR)$_{model}$ being a function averaged from correction functions f(DLR) determined for individual vehicle types, and in that the adaptation of the correction takes place by an adaptation of the correction function f(DLR) in which a factor is determined, at one interpolation point of the value DLR at which the value of the model function f(DLR)$_{model}$ is stored, in such a way that the value of the model function f(DLR)$_{model}$ at this interpolation point multiplied by the factor gives a value of the correction function f(DLR) in such a way that the correction f(DLR)*VVM is equal with respect to magnitude to the difference VHM - VVM, the sign of the correction being the reverse of the sign of the difference and the adapted values of the correction function f(DLR) at the other interpolation points DLR being obtained by multiplying the values of the model function f(DLR)$_{model}$ at the other interpolation points by the factor.

5. Method according to Claim 2, characterised in that the difference DV is determined from the equation:

$$DV = VHM - VVM + h(VVM)*f(DLR)*VVM,$$

where VHM and VVM represent the speeds of the rear wheels and the front wheels, where DLR is the difference between the front-wheel speeds referred to the average front-wheel speed VVM and where the improvement function h(VVM) tends asymptotically to 0 (201) so that the correction h(VVM)*f(DLR)*VVM also tends asymptotically to 0.

6. Method according to Claim 5, characterised in that under particular driving conditions (301-307), which are characterised at least in that the acceleration AHM of the rear wheels is below a threshold value AHM$_{max}$ (307) and that the vehicle is travelling round a curve (304), in which there is therefore no speed difference DV of the wheels of different axles due to drive slip, an adaptation of the correction takes place (308, 309) in which values of a model function h(VVM)$_{model}$ are stored at particular interpolation points VVM, the model function h(VVM)$_{model}$ being a function averaged from improvement functions h(VVM) determined for individual vehicle types, and in which the adaptation of the correction function f(DLR) initially takes place at lower speeds VVM and in which, at the interpolation points of the value VVM, at which the value of the model function h(VVM)$_{model}$ is stored, the value of the improvement function h(VVM) is then determined in such a way that the correction h(VVM)*f(DLR)*VVM is equal with respect to magnitude to the difference VHM - VVM, the sign of the correction being the reverse of the sign of the difference and the particular value of the improvement function h(VVM) being the adapted value of the model function h(VVM)$_{model}$.

7. Method according to Claim 5, characterised in that under particular driving conditions (301-307), which are characterised at least in that the acceleration AHM of the rear wheels is below a threshold value AHM$_{max}$ (307) and that the vehicle is travelling round a curve (304), in which there is therefore no speed difference DV of the wheels of different axles due to drive slip, an adaptation of the correction takes place (308, 309) in which values of a model function h(VVM)$_{model}$ are stored at particular interpolation points VVM, the model function h(VVM)$_{model}$ being a function averaged from improvement functions h(VVM) determined for individual vehicle types, and in which the adaptation of the correction function f(DLR) initially takes place at lower speeds VVM and in which an adaptation of the improvement function h(VVM) then takes place in which, at one interpolation point of the value VVM at which the value of the model function h(VVM)$_{model}$ is stored, a factor is determined in such a way that the value of the model function h(VVM)$_{model}$ at this interpolation point VVM multiplied by the factor gives a value of the improvement function h(VVM) in such a way that the correction h(VVM)*f(DLR)*VVM is equal with respect to magnitude to the difference VHM - VVM, the sign of the correction being the reverse of the sign of the difference and the adapted values of the improvement function h(VVM) at the other interpolation points VVM being obtained by multiplying the values of the model function h(VVM)$_{model}$ at the other interpolation points by the factor.

8. Method according to one of Claims 1, 3, 4, 6 or 7, characterised in that the particular driving conditions are additionally characterised by at least one of the following conditions:

- the engine is running (301),
- no braking procedure is taking place (302),

- the vehicle speed (VVM) is within a particular speed range (303, 403),
- the transverse acceleration $a_q$ is below a particular threshold value $a_{qmax}$ (305) and/or
- the variation between the speeds VHM, VVM of the rear wheels and the front wheels is below a threshold value $DV_{max}$.

## Revendications

1. Procédé pour déterminer la différence de vitesse entre des roues de différents axes d'un véhicule, la différence étant formée entre les vitesses des roues arrière et les vitesses des roues avant, une correction étant déterminée, qui compense les différences apparaissant par suite de la géométrie du véhicule entre les vitesses des roues avant et des roues arrière, la différence de vitesse entre les roues de différents axes d'un véhicule résultant de la différence plus la correction, caractérisé en ce que, dans certaines conditions de conduite (301-307), qui sont caractérisées au moins par le fait que l'accélération AHM des roues arrière est inférieure à une valeur de seuil $AHM_{max}$ (307) et qu'il se produit une conduite en courbe (304), pour lesquelles il n'apparaît ainsi pas de différence de vitesse DV entre les roues de différents axes du fait d'un glissement de l'entraînement, une adaptation de la correction intervient (308, 309), par le fait que la différence entre les vitesses VHM, VVM des roues arrière et des roues avant est déterminée et par le fait que la correction est adaptée de telle manière que la correction, dans les conditions de conduite déterminées, est, du point de vue de son montant, égale à la différence entre les vitesses VHM, VVM des roues arrière et des roues avant et présente par rapport à cette différence un signe différent.

2. Procédé pour déterminer la différence de vitesse entre des roues de différents axes d'un véhicule, la différence étant formée entre les vitesses des roues arrière et les vitesses des roues avant, une correction étant déterminée, qui compense les différences apparaissant par suite de la géométrie du véhicule entre les vitesses des roues avant et des roues arrière, la différence de vitesse entre les roues de différents axes d'un véhicule résultant de la différence plus la correction, caractérisé en ce que, lors de la correction, l'accélération transversale $a_q$ du véhicule est prise en compte (201), la correction devenant, du point de vue de son montant, plus faible pour une accélération transversale $a_q$ croissante.

3. Procédé selon la revendication 1, caractérisé en ce que la différence DV est déterminée d'après l'égalité :

$$DV = VHM - VVM + f(DLR)^*VVM,$$

où DLR est la différence des vitesses des roues avant rapportée à la vitesse moyenne des roues avant VVM, en ce que des valeurs d'une fonction modèle $f(DLR)_{modèle}$ sont mémorisées en des points de référence DLR déterminés, la fonction modèle $f(DLR)_{modèle}$ étant une fonction obtenue par moyenne des fonctions de correction $f(DLR)$ déterminées pour différents types de véhicules, et ce que l'adaptation de la correction se fait par une adaptation de la fonction de correction $f(DLR)$, par le fait qu'aux points de référence de la valeur DLR, auxquels est mémorisée la valeur de la fonction $f(DLR)_{modèle}$, la valeur de la fonction de correction $f(DLR)$ est déterminée de telle manière que la correction $f(DLR)^*VVM$ est, du point de vue de son montant, égale à la différence VHM-VVM, le signe de la correction étant opposé au signe de la différence et la valeur déterminée de la fonction de correction $f(DLR)$ étant la valeur adaptée de la fonction modèle $f(DLR)_{modèle}$.

4. Procédé selon la revendication 1, caractérisé en ce que la différence DV est déterminée d'après l'égalité :

$$DV = VHM - VVM + f(DLR)^*VVM,$$

où DLR est la différence des vitesses des roues avant rapportée à la vitesse moyenne des roues avant VVM, en ce que des valeurs d'une fonction modèle $f(DLR)_{modèle}$ sont mémorisées en des points de référence DLR déterminés, la fonction modèle $f(DLR)_{modèle}$ étant une fonction obtenue par moyenne des fonctions de correction $f(DLR)$ déterminées pour différents types de véhicules, et en ce que l'adaptation de la correction se fait par une adaptation de la fonction de correction $f(DLR)$, par le fait qu'en un point de référence de la valeur DLR, auquel est mémorisée la valeur de la fonction $f(DLR)_{modèle}$, un facteur est déterminé de telle manière que la valeur de la fonction modèle $f(DLR)_{modèle}$ en ce point de référence, multipliée par le facteur, donne une valeur de la fonction de correction $f(DLR)$ telle que la correction $f(DLR)^*VVM$ est, du point de vue de son montant, égale à la différence VHM-VVM, le signe de la correction étant opposé au signe de la différence et les valeurs adaptées de la fonction de correction $f(DLR)$ aux autres points de référence résultant de ce que les valeurs de la fonction modèle $f(DLR)_{modèle}$ aux autres points de référence sont multipliées par le facteur.

5. Procédé selon la revendication 2, caractérisé en ce que la différence DV est déterminée d'après l'égalité :

$$DV = VHM - VVM + h(VVM)^*f(DLR)^*VVM,$$

où VHM et VVM représentent les vitesses des roues arrière et des roues avant, DLR étant la différence des vitesses des roues avant rapportée à la vitesse moyenne des roues avant VVM et la fonction d'amélioration h(VVM) tendant asymptotiquement vers 0 (201), de sorte que la correction h(VVM)\*f(DLR)\*VVM tend également asymptotiquement vers 0.

6. Procédé selon la revendication 5, caractérisé en ce que, dans certaines conditions de conduite (301-307), qui sont caractérisées au moins par le fait que l'accélération AHM des roues arrière est inférieure à une valeur de seuil $AHM_{MAX}$ (307) et qu'il se produit une conduite en courbe (304), pour lesquelles il n'apparaît ainsi pas de différence de vitesse DV entre les roues de différents axes du fait d'un glissement de l'entraînement, une adaptation de la correction intervient (308, 309), par le fait que des valeurs d'une fonction modèle $h(VVM)_{modèle}$ sont mémorisées en des points de référence VVM déterminés, la fonction modèle $h(VVM)_{modèle}$ étant une fonction obtenue par moyenne de foncions d'amélioration h(VVM) obtenues pour différents types de véhicules, et par le fait que l'adaptation de la fonction de correction f(DLR) se fait d'abord à des vitesses VVM réduites et par le fait qu'ensuite, aux points de référence auxquels est mémorisée la valeur de la fonction modèle $h(VVM)_{modèle}$, la valeur de la fonction d'amélioration h(VVM) est déterminée de telle manière que la correction h(VVM)\*f(DLR)\*VVM , du point de vue de son montant, est égale à la différence VHM-VVM, le signe de la correction étant opposé au signe de la différence et la valeur déterminée de la fonction d'amélioration h(VVM) étant la valeur adaptée de la fonction modèle $h(VVM)_{modèle}$.

7. Procédé selon la revendication 5, caractérisé en ce que, dans certaines conditions de conduite (301-307), qui sont caractérisées au moins par le fait que l'accélération AHM des roues arrière est inférieure à une valeur de seuil $AHM_{max}$ (307) et qu'il se produit une conduite en courbe (304), pour lesquelles il n'apparaît ainsi pas de différence de vitesse DV entre les roues de différents axes du fait d'un glissement de l'entraînement, une adaptation de la correction intervient (308, 309), par le fait que des valeurs d'une fonction modèle $h(VVM)_{modèle}$ sont mémorisées en des points de référence VVM déterminés, la fonction modèle $h(VVM)_{modèle}$ étant une fonction obtenue par moyenne de fonctions d'amélioration h(VVM) obtenues pour différents types de véhicules, et par le fait que l'adaptation de la fonction de correction f(DLR) se fait d'abord à des vitesses VVM réduites et par le fait qu'ensuite, en un point de référence auquel est mémorisée la valeur de la fonction modèle $h(VVM)_{modèle}$, un facteur est déterminé de telle manière que la valeur de la fonction modèle $h(VVM)_{modèle}$ en ce point de référence VVM multipliée par le facteur donne une valeur de la fonction d'amélioration h(VVM) telle que la correction h(VVM)\*f(DLR)\*VVM , du point de vue de son montant, est égale à la différence VHM-VVM, le signe de la correction étant opposé au signe de la différence et les valeurs adaptées de la fonction d'amélioration h(VVM) aux autres points de référence VVM résultant de ce que les valeur de la fonction modèle $h(VVM)_{modèle}$ aux autres points de référence sont multipliées par le facteur.

8. Procédé selon l'une des revendications 1, 3, 4, 6 ou 7, caractérisé en ce que les conditions de conduite déterminées sont caractérisées de plus par au moins l'une des conditions suivantes :

- le moteur tourne (301),
- il n'intervient pas de freinage (302),
- la vitesse du véhicule (VVM) se trouve dans une certaine plage de vitesses (303, 403),
- l'accélération transversale $a_q$ est inférieure à une certaine valeur de seuil $a_{qmax}$ (305) et/ou
- la différence des vitesses VHM, VVM des roues arrière et des roues avant est inférieure à une valeur de seuil $DV_{max}$.

FIG. 1

f (DLR)

0,26
0,24
0,22
0,20
0,18
0,16
0,14
0,12
0,10
0,08
0,06
0,04
0,02
0

12

11

0   0,032  0,064 0,096 0,128 0,160 0,192 0,224 0,256

DLR

FIG. 2

h ( VVM )

1,0
0,9
0,8
0,7
0,6
0,5
0,4
0,3
0,2
0,1
0

201

0   5  10 15 20 25 30 35 40 45 50 55 60 65 70 75 80

Fahrgeschwindigkeit [ km/h ]

## Fig. 3

301 n
302 n
303 n
304 n
305 n
306 n
307 n
308

309

## Fig. 4

401 n
402 n
403 n
404 n
405 n
406 n
407 n
408

409

## Fig. 5

DLR

0,30
0,28
0,26
0,24
0,22
0,20
0,18
0,16
0,14
0,12
0,10
0,08
0,06
0,04
0,02
0,00

0          20          40

VVM [ km/h ]